# EUROPÄISCHE PATENTSCHRIFT

(11) **EP 1 641 585 B1**
(45) Veröffentlichungstag und Bekanntmachung des Hinweises auf die Patenterteilung: **22.08.2012**
(21) Anmeldenummer: 04762332.7
(22) Anmeldetag: 02.07.2004
(51) Int. Cl.: B23C 5/22

(54) **Schneideinsatz**
Cutting insert
Plaquette de coupe

(30) Priorität: 09.07.2003 DE 10331148; 24.07.2003 DE 10333621; 23.03.2004 DE 202004004654 U
(43) Veröffentlichungstag der Anmeldung: 05.04.2006
(73) Patentinhaber: Kennametal Widia Produktions GmbH & Co. KG, 45145 Essen (DE)
(72) Erfinder: HEINLOTH, Markus, 92353 Postbauer-Heng (DE)
(74) Vertreter: Vomberg, Friedhelm
(86) Internationale Anmeldenummer: PCT/DE2004/001406
(87) Internationale Veröffentlichungsnummer: WO 2005/005084

(56) Entgegenhaltungen:
- EP-A- 1 272 305
- DE-A- 10 027 945
- US-B1- 6 273 651
- PATENT ABSTRACTS OF JAPAN Bd. 2000, Nr. 01, 31. Januar 2000 (2000-01-31) & JP 11 277321 A (TOSHIBA TUNGALOY CO LTD), 12. Oktober 1999 (1999-10-12)

## Beschreibung

Die Erfindung betrifft einen Schneideinsatz gemäß dem Oberbegriff des Anspruchs 1 zum Einspannen in einen scheiben- oder leistenförmigen Werkzeugkörper, insbesondere zum Fräsen von Kurbelwellen, mit einer Frontfläche, an die sich an mindestens einer Seite, vorzugsweise an gegenüberliegenden Seiten jeweils eine konvexe Stirnfläche anschließt, deren bogenförmige sich über ein Winkelmaß >90° und ≤180° erstreckende Kanten als Schneidkanten ausgebildet sind. Ein solcher Schneideinsatz ist aus der US 6 273 651 B1 bekannt.

Die Erfindung betrifft ferner ein Fräswerkzeug mit einer Vielzahl von lateral eingespannten Schneidwerkzeugen.

Die eingangs genannten Schneideinsätze werden beim Außenfräsen von Kurbelwellen für die Bearbeitung des Unterstichs am Zapfen verwendet. Ein solcher Anwendungsfall wird beispielsweise in der EP 0 830 228 B1 anhand eines scheibenförmigen Außenfräsers beschrieben, der derart angetrieben wird, dass die spanende Bearbeitung mit Schnittgeschwindigkeiten von über 160m/min durchgeführt wird. Hierzu werden sowohl die Kurbelwelle als auch der Außenfräser rotierend bewegt. Für die Bearbeitung der zylinderförmigen Mantelflächen des rotierend bewegten Werkstückes, im Falle der Kurbelwelle für die Bearbeitung der Zapfenkontur, werden tangential eingespannte Schneideinsätze verwendet, die nach der Lehre der EP 0 830 228 B1 eine im Wesentlichen rechteckige obere Fläche besitzen, die durch jeweilige Hauptschneidkanten umfangsseitig begrenzt wird. Hieran schließen sich vier Seitenflächen an, deren jeweils gemeinsame Kanten Nebenschneidkanten bilden. Die obere Fläche soll im Bereich der eine Schneidecke bildenden benachbarten Hauptschneidkanten eine Abflachung oder Einziehung aufweisen, die sich in den Bereich beider benachbarter Hauptschneidkanten erstreckt und sich bei tangentialer Einbauweise des Schneideinsatzes zwischen der wirksamen Spanfläche, die durch die Seitenflächen gebildet wird und der wirksamen Freifläche, die durch die obere rechteckige Fläche gebildet wird, ein Winkel von 75° bis 95° einstellt, so dass ein effektiver Spanwinkel zwischen -5° und +15° vorliegt. Für die Bearbeitung der Kurbelwelle werden jedenfalls zwei unterschiedliche Schneideinsätze benötigt, von denen der radial eingespannte Schneideinsatz für die Fertigung des Unterschnittes und der tangential eingespannte Schneideinsatz für die Fertigung der Zapfen verwendet wird.

Aus dem Stand der Technik sind auch Werkzeuge bekannt, die als Drehwerkzeuge in sogenannten Drehräumen- oder Dreh-Drehräumen-Verfahren verwendet werden. Bei Drehräumen wird ein lineares Drehräumen-Werkzeug in radialer Richtung auf das zu bearbeitende rotierende Werkzeug zugestellt. Beim Dreh-Drehräumen sind auf einem Teilkreisumfang eines scheibenförmigen Werkzeugträgers mehrere aufeinander folgende Schneideinsätze angeordnet, die schrittweise kontinuierlich längs einem ersten Abschnitt des Scheibenumfanges zunehmen. Dieses Werkzeug wird entlang eines Teilkreisbogens in radialer Richtung auf das rotierend bewegte Werkstück eingeschwenkt, wie dies prinzipiell in der EP 0 313 644 B1 oder der EP 0 286 771 A1 beschrieben wird. Auch auf diesen leistenförmigen oder scheibenförmigen Werkzeugen werden zwei geometrisch unterschiedliche Schneideinsatztypen für die Zapfenbearbeitung und die Fertigung des Unterstichs verwendet.

Es ist auch bekannt, dass zur präzisen Einhaltung der gewünschten Abmessungen der zu bearbeitenden Kurbelwelle oder eines anderen rotierend bewegten Werkstückes beim Einbau der Schneideinsätze zur Ausrichtung der Schnittbreite Abstimmstücke und zur Vermeidung von Eindrückungen im Sitz des Schneideinsatzes gehärtete Unterlegstücke zu verwenden. Schneideinsätze, Abstimmstücke und Unterlegstücke können in Kassetten angeordnet sein, die auf dem scheibenförmigen oder leistenförmigen Werkzeugträger befestigt sind.

Das Fräswerkzeug arbeitet umso kostengünstiger, je weicher der Schnitt ist, d. h. je ruhiger die Werkzeugmaschine läuft. Dies kann unter anderem dadurch erreicht werden, dass das Werkzeug eine möglichst große Zahl an wirksamen Schneidkanten aufweist. So wird beispielsweise in der DE 100 27 945 A1 ein Scheibenfräser beschrieben, bei dem die tangential eingespannten Schneideinsätze unter einem axialen Neigungswinkel von 15° bis 35°, vorzugsweise 20° bis 30° angeordnet sind. Die hinterste Schneidecke der tangential eingespannten Schneideinsätze liegt entgegen der Fräsrichtung betrachtet auf einer Geraden vertikal zur Drehrichtung des Scheibenfräsers, die von der vordersten Schneidkante des darauf folgenden radial eingespannten Schneideinsatzes einen Abstand von ≤ 5mm, vorzugsweise ≤ 2mm, bis hin zu negativen Werten aufweist. Durch Verwendung so genannter Wendeschneidplatten, die mehrere nacheinander nutzbare Schneidkanten aufweisen, lassen sich die Kosten für die Schneideinsätze erheblich minimieren; so besitzen die vorbeschriebenen radial bzw. tangential eingespannten Schneideinsätze jeweils vier nutzbare Schneiden. Sind die nutzbaren Schneidkanten eines Schneideinsatzes verschlissen, müssen die Schneideinsätze ausgetauscht werden, was eine entsprechende Lagerhaltung für die beiden benötigten Schneideinsatztypen voraussetzt.

Weiterhin ist aus der US 6,273,651 ein Schneideinsatz zum Schneiden von Profilen bekannt, der eine bogenförmig ausgebildete Schneidkante zum Ausbilden eines Unterstichs aufweist. Dieser Schneideinsatz besitzt eine konkav oder geradlinig ausgebildete Schneidkante, die sich an das bogenförmige Teilstück anschließt, und die zur Bearbeitung eines Übergangsbereichs zu einem zylinderförmigen Oberflächenstück dient.

Schließlich wird in der EP 1 272 305 ein Schneideinsatz offenbart, mit dem ein Unterstich bearbeitet werden kann, wobei anschließend mit dem gleichen Schneideinsatz die Nockenkontur behandelt werden soll.

Es ist Aufgabe der vorliegenden Erfindung, einen Schneideinsatz anzugeben, dessen Einsatzmöglichkeiten erweitert werden.

Zur Lösung dieser Aufgabe wird ein Schneideinsatz gemäß Anspruch 1 vorgeschlagen. Erfindungsgemäß besitzt der eingangs beschriebene Schneideinsatz im Anschluss an die bogenförmige Schneidkante bzw. die bogenförmigen Schneidkanten eine konkav gekrümmt und in Form einer kreisförmigen Nut ausgebildete Kante, wobei sich im Anschluss an die genannte konkav gekrümmte Kante eine linear verlaufende Schneidkante zur Bearbeitung von zylindrischen Mantelflächen, insbesondere Zapfenoberflächen von Kurbelwellen erstrecken. Das Befestigungsloch zur Aufnahme der Spannschraube kann in einer ersten Ausführungsform die Frontfläche durchdringen; in diesem Fall ist der Schneideinsatz für eine laterale Einspannung vorgesehen. Nach einer zweiten Ausführungsform durchdringt das Befestigungsloch die sich an die lineare Schneidkante anschließende Dachfläche, so dass der Schneideinsatz tangential einspannbar ist. Die genannte lineare Kante oder die konkav gekrümmte Kante dient als Spanbrecher. Vorzugsweise werden auf einem Fräswerkzeug eine Vielzahl von lateral eingespannten Schneideinsätzen verwendet, bei dem jeweils abwechselnd ein Schneideinsatz mit einer bogenförmigen Kante und einer sich hieran anschießenden linearen Kante und ein Schneideinsatz mit einer bogenförmigen

Kante und einer sich hieran anschließenden konkav gekrümmten Kante und einer weiteren linear verlaufenden Schneidkante aufeinander folgend angeordnet. Die lineare Kante des ersten Schneideinsatzes und die konkav gekrümmten Kante des zweiten Schneideinsatzes liegen in gleichen Flächenebenen, wobei sich der besondere Vorteil ergibt, dass die Anzahl der für die Unterstichbearbeitung vorgesehenen Schneidkanten eines Schneideinsatzes verdoppelt werden kann, da der Schneideinsatz mit einer zusätzlichen linear verlaufenden Schneidkante zur Bearbeitung von zylindrischen Mantelflächen zusätzlich eine bogenförmig ausgebildete Schneidkante für die Fertigung von Unterstichen aufweist.

Um die bogenförmige Schneidkante zu stabilisieren, weist diese Schneidkante nach einer weiteren Ausgestaltung der Erfindung eine Fase auf, die unter einem Fasenwinkel von 0 bis 20°, vorzugsweise 10°, angeordnet ist und/oder eine Breite von 0,1 mm bis 0,25 mm, vorzugsweise 0,12 mm, besitzt und/oder die zur Frontfläche hin zu einer Breite von 0 mm ausläuft. Vorzugsweise beträgt der Krümmungsradius der genannten bogenförmigen Schneidkante 1,0 bis 2,5 mm, insbesondere 1,4 mm.

Sofern hinter dieser bogenförmigen Schneidkante eine konkave Kante angeordnet ist, ist deren Krümmungsradius nach einer weiteren Ausgestaltung der Erfindung kleiner als der Krümmungsradius der bogenförmigen Schneidkante. In einer konkreten Ausführungsform ist ein Krümmungsradius für die konkav gekrümmte Kante von 0,6 mm gewählt. In Verbindung mit einer sich hieran anschließenden linearen Schneidkante erfüllt die konkav gekrümmte Kante die Funktion eines Spanteilers.

Die an die bogenförmige Schneidkante und/oder an die linear verlaufende Schneidkante angrenzenden Spanflächenabschnitte sind nach einer weiteren Ausgestaltung der Erfindung unter einem positiven Spanwinkel, vorzugsweise von 0° bis 20°, insbesondere von 10°, angeordnet. Um in diesem Bereich den ablaufenden Span optimal formen zu können, ist die an die Schneidkanten angrenzende Spanfläche jeweils als Spanformmulde ausgebildet, d. h., dass sich an die zur Bildung eines positiven Spanwinkels ausgebildete abfallende Flanke in einem Schneidkanten ferneren Bereich eine ansteigende Flanke anschließt, durch die der Span nach oben gebogen und zum Bruch gebracht wird.

Nach einer weiteren Ausgestaltung der Erfindung kann der Schneideinsatz, der sowohl eine bogenförmige Schneidkante für die Unterstichbearbeitung als auch eine lineare Schneidkante für die Zapfenbearbeitung besitzt, im mittleren Bereich jeweils senkrecht zur Frontfläche angeordnete, ebene Seitenflächen aufweisen, die sich mit wachsendem Abstand zur Frontfläche verjüngen, wobei vorzugsweise die an diese Seitenflächen angrenzenden abfallenden Flächen als Spanleitstufe für die von der linear verlaufenden Schneidkante geschnittenen Späne ausgebildet sind. Die genannten ebenen Seitenflächen bilden in Verbindung mit weiteren Auflageflächen Anlageflächen für den Schneidplattensitz, die Unterlegstücke entbehrlich machen.

Weitere Vorteile und Ausführungsformen des erfindungsgemäßen Schneideinsatzes sowie eines mit den Schneideinsätzen bestückten Fräswerkzeuges werden anhand der Zeichnungen nachfolgend beschrieben. Es zeigen.
- Fig. 1: schematische Ansichten der nach dem Stand der Technik bekannten Schneideinsätze zur radialen oder tangentialen Einspannung sowie die mit mehreren dieser Schneideinsätze zu fertigende Schnittkontur,
- Fig. 2: eine Ausführungsform eines Schneideinsatzes in einer perspektivischen Ansicht,
- Fig. 3: eine Ausführungsform der Erfindung, ebenfalls in einer perspektivischen Ansicht,
- Fig. 4: schematische Ansichten der Schneideinsätze nach Fig. 2 und 3 sowie die hiermit erzeugbaren Schnittkontur,
- Fig. 5-7: verschiedene Ansichten des Schneideinsatzes gemäß Fig. 2,
- Fig. 8: eine Detailvergrößerung in Ansicht nach Fig. 7,
- Fig. 9-11: verschiedene Ansichten eines Schneideinsatzes nach Fig. 3,
- Fig. 12: eine Detailansicht nach Fig. 11,
- Fig. 13: eine Teilansicht eines Fräsers, der mit Schneideinsätzen nach Fig. 1 bis 12 bestückt ist,
- Fig. 14: eine weitere Ausführungsform eines erfindungsgemäßen Schneideinsatzes in einer perspektivischen Ansicht und
- Fig. 15: eine Teilansicht eines Fräsers, der mit Schneideinsätzen nach Fig. 14 bestückt ist.

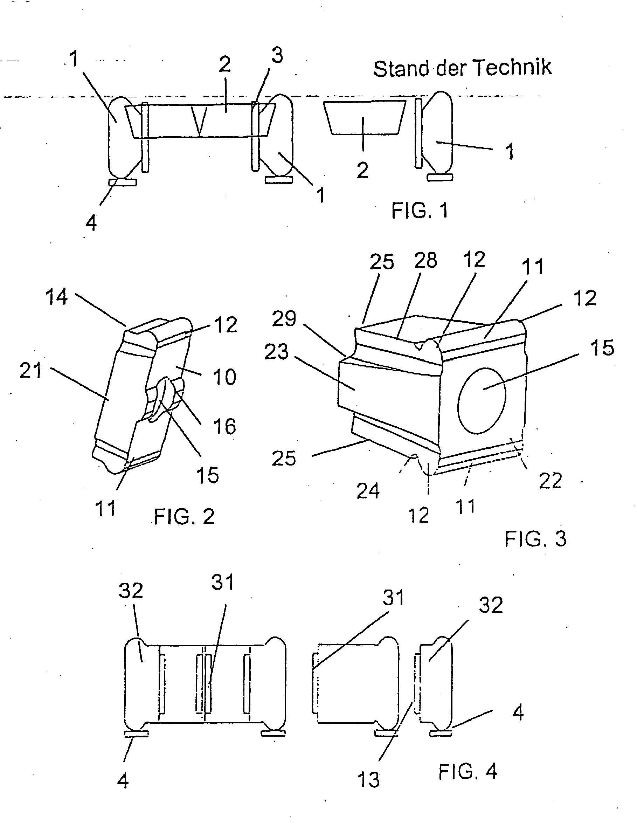

Der Schneideinsatz 1 gemäß Fig. 1 ist Ausgangspunkt der vorliegenden Erfindung. Dieser Schneideinsatz besitzt eine Frontfläche, von der sich aus zur gegenüber liegenden parallelen Fläche eine konvexe Stirnfläche anschließt, deren bogenförmige Kanten als Schneidkanten ausgebildet sind. Dieser Schneideinsatz wird lateral und im Wechsel mit tangential eingespannten Schneideinsätzen 2 in einem Werkzeugträger, beispielsweise einer Fräserscheibe, eingespannt. Um eine präzise Einhaltung der gewünschten Abmessungen der zu bearbeitenden Kurbelwelle zu erreichen, werden beim Einbau der Wendeschneidplatten zur Ausrichtung der Schnittbreite sogenannte Abstimmstücke 3 und zur Vermeidung von Eindrückungen im Sitz der Wendeschneidplatten gehärtete Unterlegstücke 4 verwendet. Das erzeugte Schnittbild bzw. die Profilkontur ergibt sich aus der linken Abbildung in Fig. 1.

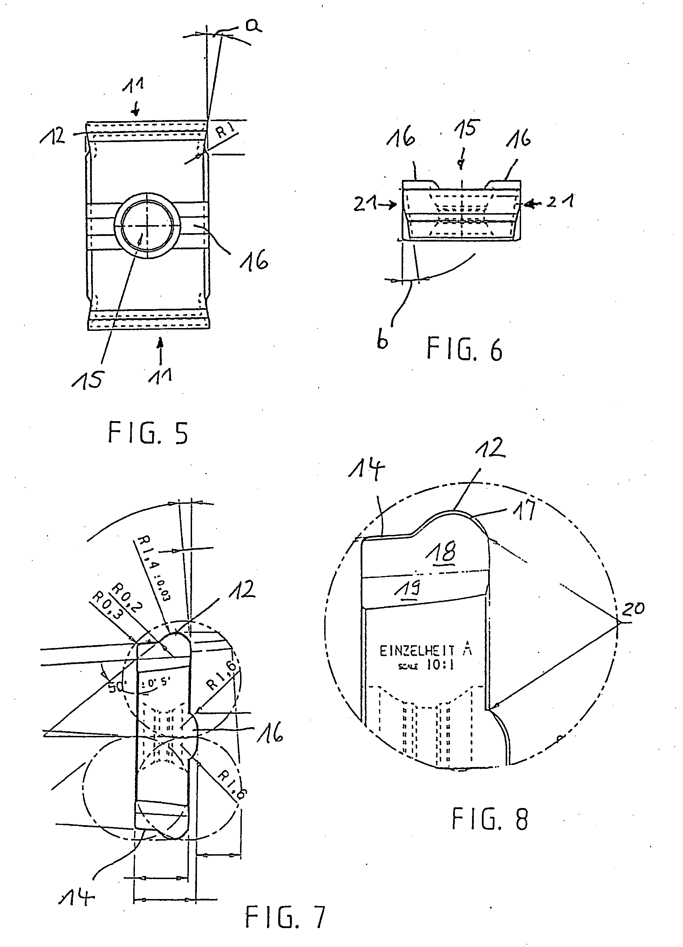

In der in Fig. 2 dargestellten Ausführungsform besitzt der Schneideinsatz eine Frontfläche, die beidseitig in eine konvex ausgebildete Stirnfläche 11 übergeht, deren seitliche Kanten als Schneidkanten ausgebildet sind. Allerdings laufen diese Schneidkanten nicht wie beim Schneideinsatz 1 gemäß Fig. 1 schräg aus, sondern gehen in eine lineare im Wesentlichen vertikal zur Auflagefläche liegende oder maximal um 4° gegen eine Vertikale zur Auflagefläche geneigte Kante 14 über bzw. einen sich über die Breite des Schneideinsatzes erstreckenden Absatz. Die Frontfläche wird von einem Befestigungsloch 15 durchdrungen, wobei sich die betreffende Durchbrechung durch den gesamten Schneideinsatz (siehe Fig. 6) erstreckt. Beidseitig des Befestigungsloches und parallel zu dem durch die Fläche 11 gebildeten oberen und unteren Kanten ist eine beidseitige Erhebung 16 vorgesehen, deren Randkante zur Fertigung eines Hüllbundes nutzbar ist. Weitere Einzelheiten dieses Schneideinsatzes ergeben sich aus Fig. 5 bis 8. Der Schneideinsatz ist sowohl zu einer Längs- als auch zu einer Querachse spiegelsymmetrisch aufgebaut, so dass sich als Begrenzungen der jeweiligen Stirnflächen 11 vier Schneidkanten 12 ergeben. Der Krümmungsradius der Schneidkanten 12 beträgt 1,0 mm bis 2,5 mm, vorzugsweise 1,4 mm. Hieran schließt sich eine zwischen 0° bis 10°, vorzugsweise zwischen 3° bis 4°, gegen eine Vertikale zur Frontfläche 12 geneigte Kante 14 an, die sich über die gesamte Breite der Rückseite des Schneideinsatzes erstreckt. Wie aus Fig. 5 ersichtlich, sind die Schneidkanten 12 unter einem Winkel von 0° bis 20°, vorzugsweise von a = 10°, zur Längsmittelachse des Schneideinsatzes bzw. einer Parallelen hierzu angeordnet. Die Schneidkante 12 sowie auch die Kante 14 sind mit einer Fase 17 versehen, die unter einem Fasenwinkel von 0° bis 25°, vorzugsweise 10°, angeordnet ist und eine gleichmäßige Fasenbreite von 0,1 mm bis 0,25 mm, z. B. von 0,12 mm hat. Hinter der Schneidkante 12 sowie der Kante 14 schließt sich ein Spanflächenbereich an, der aus einer abfallenden Flanke 18 zur Bildung eines positiven Spanwinkels und aus einer Anstiegsflanke 19 zur Spanformung und zum Spanbruch besteht. Die Fase 17 läuft ebenso wie die Fase an der Schneidkante der Erhebung 16 jeweils endseitig der gekrümmten Schneidkante zu 0 aus (siehe Bezugsziffer 20). Im mittleren Bereich besitzt der Schneideinsatz jeweils an den schmalen Seitenkanten ebene Flächen 21, die als Anlageflächen für die Plattensitz dienen. Aus Fig. 6 wird zudem ersichtlich, dass der Schneideinsatz - mit Ausnahme der Seitenflächen 21 - nach hinten hin um einen Winkel b von 0° bis 10° im Bereich der Spanflächen bildenden Flanken 18, 19 geneigt ist.

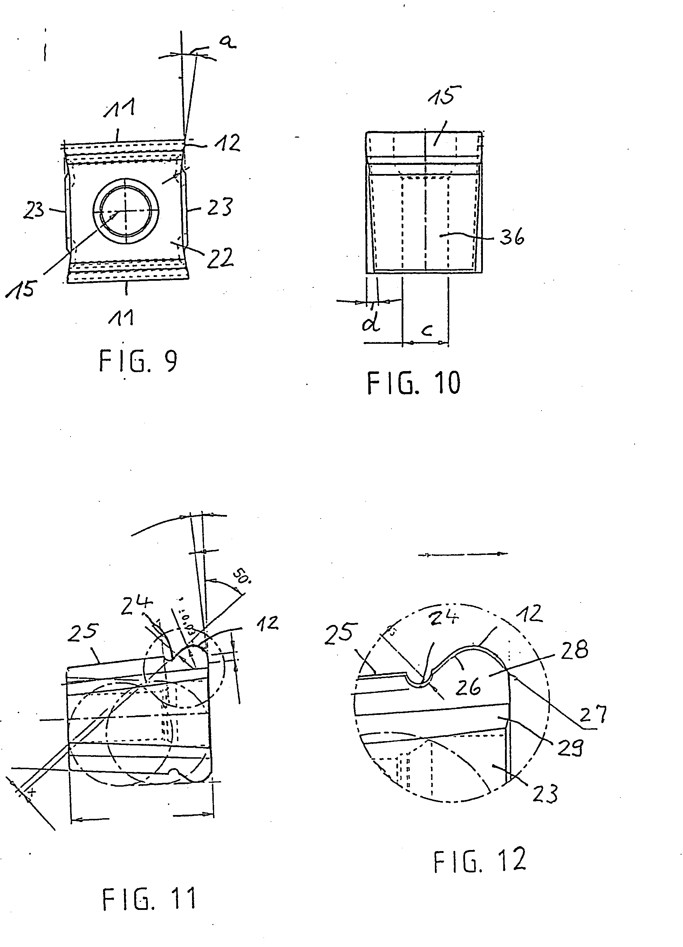

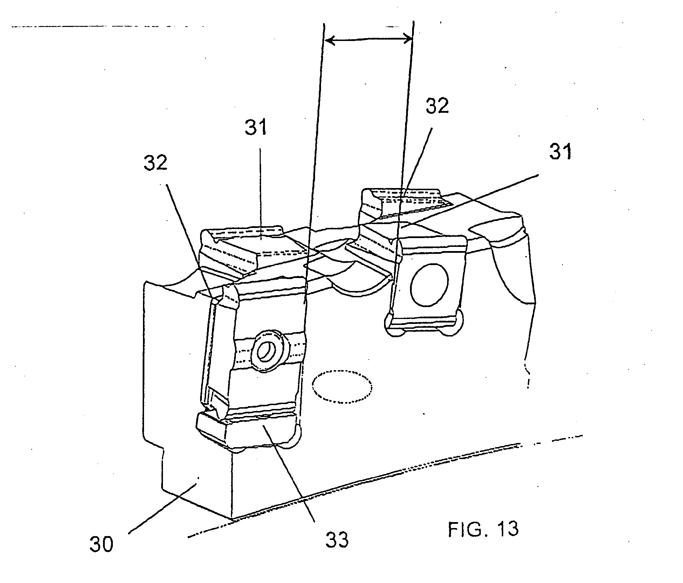

Eine Ausführungsvariante der Erfindung zeigen Fig. 3 und 9 bis 12. Dieser Schneideinsatz besitzt eine ebene Frontfläche 22, von der sich im mittleren Bereich nach hinten im rechten Winkel hierzu angeordnete Seitenflächen 23 erstrecken, die sich nach hinten verjüngen. Diese Seitenflächen 23 dienen als Anlageflächen für den Plattensitz. Bogenförmig ausgebildete Stirnflächen 11 werden durch Schneidkanten 12 begrenzt, deren Radius mit 1,0 mm bis 2,5 mm, vorzugsweise 1,4 mm, ebenso groß ist wie der Schneidkantenradius der Schneidkante 12 des Schneideinsatzes nach Fig. 2. An diese Schneidkante 12 schließt sich eine konkav geformte Kante 24 an, die im Ausführungsbeispiel nach Fig. 3 als Spanteiler wirkt und die in Form einer kreisförmigen Nut sich über die gesamte Breite des Schneideinsatzes erstreckt. Der Radius dieser konkaven Kante ist deutlich kleiner als der Radius der Schneidkante 12 ausgebildet. Im Anschluss an diese konkave Kante verläuft nach hinten eine lineare Schneidkante 25 bis zum Ende des Schneideinsatzes. Diese linear verlaufende Schneidkante dient zum Bearbeiten von zylindrischen Mantelflächen, insbesondere Zapfenoberflächen von Kurbelwellen, worauf später noch eingegangen wird. Entlang der Kanten 12, 24 und 25 ist eine Fase 26 vorgesehen, die unter einem Winkel von 0° bis 20°, vorzugsweise unter einem Winkel von 10° geneigt ist und eine Breite von 0,1 bis 0,25 mm, vorzugsweise von 0,12 mm aufweist. Diese Fase läuft zur Frontfläche 22 am Ort 27 zu 0 aus. Im Anschluss an die Schneidkanten 12, 24 und 25 bzw. die Fase 26 ist eine abfallende Flanke 28 unter einem positiven Spanwinkel vorgesehen, die rückseitig in eine ansteigende Flanke 29 übergeht, so dass die Flächenbereiche 28 und 29 eine Spanformmulde bilden. Das Befestigungsloch bzw. die sich fortsetzende Durchbrechung 16 besitzen im oberen Teil eine Ansenkung zur Aufnahme eines Kopfes einer Spannschraube, wobei die Durchbrechung 36 eine Breite c besitzt, die eine Durchführung des Schaftes einer Spannschraube ermöglicht. Wie aus Fig. 3 und 10 ersichtlich, verlaufen die Kanten 12, 24 und 25 nach hinten unter einem Winkel d geneigt, der ≤3° beträgt. Der Schneideinsatz nach Fig. 3 und 9 bis 12 wird ebenfalls lateral in einen Werkzeughalter, z. B. einem Außenfräser eingesetzt, wie dies aus der Teilansicht des Werkzeugkörpers 30 ersichtlich ist. Die konkave Kante 24 dient bei dieser Einbauweise als Spanbrecher, der bewirkt, dass die von der linearen Schneidkante 25 sowie der konvexen Schneidkante 12 geschnittenen Späne aufgeteilt werden. Aus Fig. 13 ist ferner ersichtlich, dass jeweils alternierend auf dem scheibenförmigen Werkzeugträger 30 Schneideinsätze 31 entsprechend Fig. 3 und Schneideinsätze 32 entsprechend Fig. 2 eingespannt sind. Die Lage dieser auf einer Seite aufeinander folgender Schneideinsätze 31 und 32 ist derart, dass sich die Kante 14 des Schneideinsatzes 32 und die konkave Kante 24 des Schneideinsatzes 31 im Schnittbild überdecken. Im Ergebnis wird das Schneidverhalten der Werkzeugmaschine, auf dem der Träger 30 angeordnet isf, in Folge geringerer Spanwinkel, einer besseren Spanteilung und dadurch niedrigerer Schnittkräfte pro Schneidplatte erheblich weicher und dementsprechend verbessert. Im Gegensatz zum Schneideinsatz 32, der noch durch ein Unterlegstück 33 abgestützt wird, benötigt der Schneideinsatz 31 kein Unterlegstück, da hinreichend große Abstützflächen für einen Schneidplattensitz (auf allen vier Seiten) vorliegen. Der Schneideinsatz 31 ersetzt die nach dem Stand der Technik erforderlichen in einer Draufsicht quadratischen, tangential eingespannten Schneideinsätze, denen gegenüber er den Vorteil hat, dass er zusätzliche Schneiden zur Bearbeitung des Unterstiches aufweist, so dass insgesamt bei Verwendung der Schneideinsätze 31 und 32 doppelt so viel Schneidkanten zur Unterstichbearbeitung vorliegen. Die alternierende Anordnung der Schneideinsätze 31 und 32 auf einem Fräser wird lediglich aus Platzgründen bevorzugt gewählt, da die Schneideinsätze nach Fig. 3 einen relativ großen Platzbedarf haben und demgemäß nicht so dicht aufeinander folgend aneinander gereiht werden können wie Schneideinsätze 31 und 32 im Wechsel. Allerdings benötigt der Schneideinsatz 31 kein Unterlegstück sowie auch kein Abstimmungsstück, so dass entsprechende Teile eingespart werden können. Der Schneideinsatz 31 besitzt vier Schneidkanten 12 sowie vier Schneidkanten 25, die durch entsprechende Drehung des Schneideinsatzes jeweils nutzbar gemacht werden können. Der Werkzeugträger 30 ist als Außenfräser dargestellt; jedoch kann der Schneideinsatz 31 in Verbindung mit Schneideinsatz 32 ebenso auf einem Innenfräser oder auf einem leistenförmigen Werkzeug zum Dreh-Räumen oder Dreh-DrehRäumen verwendet werden.

Das mit den Schneieinsätzen 31 und 32 erzeugbare Profil zeigt Fig. 4, linke Abbildung. Die Schneideinsätze 32 sind mittels eines Abstimmstückes 13 ausgerichtet.

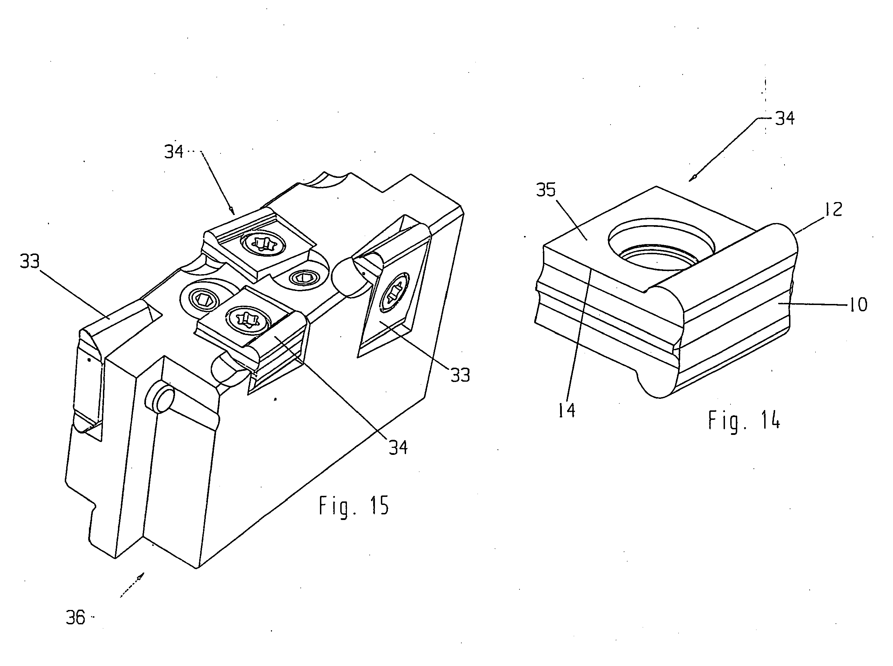

Die in Fig. 14 dargestellte Ausführungsform betrifft einen Schneideinsatz, dessen Befestigungsloch die Fläche 35 durchdringt, die sich jeweils an die Kante 14 als obere Fläche anschließt. Der Schneideinsatz ist hinsichtlich einer zu dieser Fläche 34 parallelen Mittelebene spiegelsymmetrisch ausgebildet und kann somit als Wendeschneidplatte eingesetzt werden.

Fig. 15 zeigt einen Fräser 36, der mit Schneideinsätzen 33 und 34 bestückt ist. Hinsichtlich der Vorteile ergibt sich entsprechendes wie zu dem Fräser gemäß Fig. 13 ausgeführt.

## Patentansprüche

1. Schneideinsatz zum Einspannen in einen scheiben- oder leistenförmigen Werkzeugkörper (30, 36), insbesondere zum Fräsen von Kurbelwellen,
mit einer Frontfläche (10, 22), an die sich an mindestens einer Seite, vorzugsweise an gegenüberliegenden Seiten, jeweils eine konvexe Stirnfläche (11) anschließt, deren bogenförmige sich über ein Winkelmaß >90° und ≤ 180° erstreckenden Kanten (12) als Schneidkanten ausgebildet sind, **dadurch gekennzeichnet,**
**dass** sich an die bogenförmige(n) Schneidkante(n) (12) eine konkav gekrümmte und in Form einer kreisförmigen Nut ausgebildete Kante (24) anschließt, wobei sich im Anschluss an die konkav gekrümmte Kante (24) eine linear verlaufende Schneidkante (25) zur Bearbeitung von zylindrischen Mantelflächen, insbesondere Zapfenoberflächen von Kurbelwellen erstreckt.

2. Schneideinsatz nach Anspruch 1, **dadurch gekennzeichnet, dass** das Befestigungsloch zur Aufnahme einer Spannschraube die Frontfläche (10, 22) durchragt, so dass der Schneideinsatz (31) lateral in den Werkzeugträger (30) einspannbar ist.

3. Schneideinsatz nach Anspruch 1, **dadurch gekennzeichnet, dass** das Befestigungsloch zur Aufnahme einer Spannschraube die sich an die lineare Schneidkante anschließende Dachfläche (35) durchdringt, so dass der Schneideinsatz (34) über eine radial in den Werkzeugträger (36) einführbare Spannschraube befestigt ist.

4. Schneideinsatz nach einem der Ansprüche 1 bis 3, **dadurch gekennzeichnet, dass** die bogenförmige Schneidkante (12) eine Fase (17, 26) aufweist, die unter einem Fasenwinkel von 0° bis 20°, vorzugsweise von 10°, angeordnet ist und/oder eine Breite von 0,1 bis 0,25 mm, vorzugsweise 0,12 mm, besitzt und/oder die zur Frontfläche hin zu einer Breite von 0 mm ausläuft.

5. Schneideinsatz nach einem der Ansprüche 1 bis 4, **dadurch gekennzeichnet, dass** der Krümmungsradius der bogenförmigen Schneidkante (12) 1,0 mm bis 2,5 mm, vorzugsweise 1,4 mm, beträgt.

6. Schneideinsatz nach einem der Ansprüche 1 bis 5, **dadurch gekennzeichnet, dass** der Krümmungsradius der konkav gekrümmte Kante (24) kleiner ist als der Krümmungsradius der bogenförmigen Schneidkante (12), vorzugsweise 0,3 mm bis 1 mm, insbesondere 0,6 mm, beträgt.

7. Schneideinsatz nach einem der Ansprüche 1 bis 6, **dadurch gekennzeichnet, dass** die an die bogenförmige Schneidkante (12) und/oder an die linear verlaufende Schneidkante (25) angrenzenden Flanken (18, 28) unter einem positiven Spanwinkel zwischen 0° und 20°, vorzugsweise unter einem positiven Spanwinkel von 10°, angeordnet sind.

8. Schneideinsatz nach einem der Ansprüche 6 oder 7, **dadurch gekennzeichnet, dass** im mittleren Bereich jeweils senkrecht zur Frontfläche (22) ebene Seitenflächen (23) ausgebildet sind, die sich mit wachsendem Abstand zur Frontfläche (22) verjüngen, wobei vorzugsweise die an diese Seitenflächen angrenzenden abfallenden Flanken (29) als Spanleitstufe für die von der linear verlaufenden Schneidkante (25) geschnittenen Späne ausgebildet sind.

9. Fräswerkzeug mit einer Vielzahl von lateral eingespannten Schneideinsätzen (31) nach einem der Ansprüche 1 bis 8, bei dem jeweils abwechselnd ein Schneideinsatz (32) mit einer bogenförmigen Kante (12) und einer sich linear anschließenden linearen Kante (14) und ein Schneideinsatz (31) mit einer bogenförmigen Kante (12), einer sich anschließenden konkav gekrümmten Kante (24) und einer weiteren linear verlaufenden Schneidkante (25) aufeinander folgend angeordnet sind.

## Claims

1. Cutting insert for clamping in a disc- or strip-like tool body (30, 36), in particular for milling crankshafts, having a front surface (10, 22), which is adjoined on at least one side, preferably on opposite sides, by in each case a convex end face (11), the arcuate edges (12) of which, which extend over an angular dimension of >90° and ≤180°, are in the form of cutting edges, **characterized in that** the arcuate cutting edge(s) (12) is/are adjoined by a concavely curved edge (24) in the form of a circular groove, wherein the concavely curved edge (24) is followed by a linearly extending cutting edge (25) for machining cylindrical lateral surfaces, in particular journal surfaces of crankshafts.

2. Cutting insert according to Claim 1, **characterized in that** the fastening hole for receiving a tensioning screw passes through the front surface (10, 22) such that the cutting insert (31) is clampable laterally in the tool carrier (30).

3. Cutting insert according to Claim 1, **characterized in that** the fastening hole for receiving a tensioning screw penetrates through the top surface (35) adjoining the linear cutting edge, such that the cutting insert (34) is fastened via a tensioning screw that is introducible radially into the tool carrier (36).

4. Cutting insert according to one of Claims 1 to 3, **characterized in that** the arcuate cutting edge (12) has a bevel (17, 26) which is arranged at a bevel angle of 0° to 20°, preferably of 10° and/or has a width of 0.1 to 0.25 mm, preferably 0.12 mm and/or which runs out towards the front surface by a width of 0 mm.

5. Cutting insert according to one of Claims 1 to 4, **characterized in that** the radius of curvature of the arcuate cutting edge (12) is 1.0 mm to 2.5 mm, preferably 1.4 mm.

6. Cutting insert according to one of Claims 1 to 5, **characterized in that** the radius of curvature of the concavely curved edge (24) is less than the radius of curvature of the arcuate cutting edge (12) and is preferably 0.3 mm to 1 mm, in particular 0.6 mm.

7. Cutting insert according to one of Claims 1 to 6, **characterized in that** the flanks (18, 28) adjoining the arcuate cutting edge (12) and/or adjoining the linearly extending cutting edge (25) are arranged at a positive rake angle of between 0° and 20°, preferably at a positive rake angle of 10°.

8. Cutting insert according to either of Claims 6 and 7, **characterized in that** planar side surfaces (23) are formed in the central region in each case perpendicularly to the front surface (22), said side surfaces (23) narrowing with increasing distance from the front surface (22), wherein preferably the sloping flanks (29) adjoining these side surfaces are formed as a chip-breaker groove for the chips cut by the linearly extending cutting edge (25).

9. Milling tool having a multiplicity of laterally clamped cutting inserts (31) according to one of Claims 1 to 8, in which a cutting insert (32), which has an arcuate edge (12) and a linearly adjoining linear edge (14), and a cutting insert (31), which has an arcuate edge (12), an adjoining concavely curved edge (24) and a further linearly extending cutting edge (25), are arranged in succession, in each case in an alternating manner.

## Revendications

1. Insert de coupe destiné à être serré dans un corps d'outil (30, 36) en forme de disque ou en forme de baguette, en particulier pour le fraisage de vilebrequins, comprenant une surface avant (10, 22), à laquelle se raccorde respectivement, au moins sur un côté, de préférence sur des côtés opposés, une surface frontale (11) convexe dont les arêtes (12) arquées s'étendant sur une dimension angulaire >90° et ≤180° sont réalisées sous forme d'arêtes de coupe,
**caractérisé en ce**
**qu'**une arête (24) courbée de manière concave et réalisée en forme de rainure circulaire se raccorde à l'(aux) arête(s) de coupe (12) arquée(s), une arête de coupe (25) s'étendant de façon linéaire destinée à l'usinage de surfaces externes cylindriques, en particulier de surfaces de tourillons de vilebrequins, s'étendant à la suite de l'arête (24) courbée de manière concave.

2. Insert de coupe selon la revendication 1, **caractérisé en ce que** le trou de fixation destiné à la réception d'une vis de serrage traverse la surface avant (10, 22) de telle sorte que l'insert de coupe (31) puisse être serré latéralement dans le corps d'outil (30).

3. Insert de coupe selon la revendication 1, **caractérisé en ce que** le trou de fixation destiné à la réception d'une vis de serrage traverse la surface de toit (35) se raccordant à l'arête de coupe linéaire, de telle sorte que l'insert de coupe (34) soit fixé au moyen d'une vis de serrage pouvant être insérée radialement dans le corps d'outil (36).

4. Insert de coupe selon l'une quelconque des revendications 1 à 3, **caractérisé en ce que** l'arête de coupe (12) arquée comprend un biseau (17, 26) qui est disposé suivant un angle de biseau de 0° à 20°, de préférence de 10°, et/ou présente une largeur de 0,1 à 0,25 mm, de préférence de 0,12 mm, et/ou se termine par une largeur de 0 mm en direction de la surface avant.

5. Insert de coupe selon l'une quelconque des revendications 1 à 4, **caractérisé en ce que** le rayon de courbure de l'arête de coupe (12) arquée vaut de 1,0 mm à 2,5 mm, de préférence 1,4 mm.

6. Insert de coupe selon l'une quelconque des revendications 1 à 5, **caractérisé en ce que** le rayon de courbure de l'arête (24) courbée de manière concave est inférieur au rayon de courbure de l'arête de coupe (12) arquée, et vaut de préférence de 0,3 mm à 1 mm, en particulier 0,6 mm.

7. Insert de coupe selon l'une quelconque des revendications 1 à 6, **caractérisé en ce que** les flancs (18, 28) adjacents à l'arête de coupe (12) arquée et/ou à l'arête de coupe (25) s'étendant de façon linéaire sont disposés suivant un angle de coupe positif entre 0° et 20°, de préférence suivant un angle de coupe positif de 10°.

8. Insert de coupe selon la revendication 6 ou 7, **caractérisé en ce que** des surfaces latérales (23) planes respectivement perpendiculaires à la surface avant (22) sont réalisées dans la région centrale, lesquelles surfaces latérales se rétrécissent au fur et à mesure que la distance à la surface avant (22) augmente, les flancs (29) inclinés qui se raccordent à ces surfaces latérales étant réalisés sous forme de gradin de guidage de copeaux pour les copeaux coupés par l'arête de coupe (25) s'étendant de façon linéaire.

9. Outil de fraisage comprenant une pluralité d'inserts de coupe (31) serrés latéralement selon l'une quelconque des revendications 1 à 8, dans lequel sont disposés, l'un à la suite de l'autre respectivement en alternance, un insert de coupe (32) doté d'une arête (12) arquée et d'une arête linéaire (14) s'y raccordant et un insert de coupe (31) doté d'une arête (12) arquée, d'une arête (24) courbée de manière concave s'y raccordant et d'une autre arête de coupe (25) s'étendant de façon linéaire.
